Europäisches Patentamt

European Patent Office

Office européen des brevets

(19)

(11) **EP 1 018 826 A2**

(12) **EUROPÄISCHE PATENTANMELDUNG**

(43) Veröffentlichungstag:
 **12.07.2000   Patentblatt 2000/28**

(51) Int Cl.⁷: **H04L 27/26**

(21) Anmeldenummer: **00100006.6**

(22) Anmeldetag: **03.01.2000**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI** | (71) Anmelder: **PolyTrax Information Technology AG**<br>**81829 München (DE)** |
| (30) Priorität: **07.01.1999  DE 19900324** | (72) Erfinder: **Täger, Wolfgang, Dr. Ing.**<br>**81673 München (DE)** |
| | (74) Vertreter: **Strehl Schübel-Hopf & Partner**<br>**Maximilianstrasse 54**<br>**80538 München (DE)** |

(54) **Mehrträgerübertragung auf Stromnetzen**

(57)    Die Erfindung betrifft ein Verfahren zur Datenübertragung, insbesondere in Stromnetzen, bei dem codierte Daten blockweise mittels eines orthogonalen Frequenzmultiplexverfahrens (OFDM) auf mehrere Trägerfrequenzen innerhalb eines oder mehrerer bestimmter Frequenzbänder moduliert werden und das durch inverse Fouriertransformation erhaltene, einem Datenblock entsprechende Signal für eine vorgegebene Zeitdauer (T) an einen Empfänger übertragen wird, wobei einzelne Signale als Signalblöcke zeitlich aufeinanderfolgen. Um hohe Datenübertragungsraten in schmalen Frequenzbändern zu erzielen und die Erzeugung von Störfrequenzen zu vermeiden, wird vorgeschlagen, jedes Signal vor der Übertragung mit einer Fensterfunktion zu multiplizieren, deren Fouriertransformierte im Absolutbetrag an den verwendeten Trägerfrequenzen jeweils einen Nulldurchgang besitzt und Nebenmaxima besitzt, die in Relation zum Hauptmaximum eine Dämpfung von mindestens -30 dB aufweisen. Anstelle der Fenstertechnik läßt sich auch ein Digitalfilter verwenden, der eine ungerade Anzahl von Koeffizienten $c_k$ besitzt, wobei $c_{-k} = c_k$, und wobei die Koeffizienten $c_k$ derart gewählt werden, daß die Übertragungsfunktion des Filters eine Dämpfung von mindestens -30 dB, vorzugsweise mindestens -50 dB, außerhalb der Grenzen der jeweils verwendeten Frequenzbänder aufweist.

EP 1 018 826 A2

**Beschreibung**

Die Erfindung betrifft ein Verfahren zur Datenübertragung, insbesondere in Stromnetzen, bei dem codierte Daten blockweise mittels einem orthogonalen Frequenzmultiplexverfahren (OFDM) auf mehrere Trägerfrequenzen innerhalb eines oder mehrerer bestimmter Frequenzbänder moduliert werden und das durch inverse Fouriertransformation erhaltene, einem Datenblock entsprechende Signal für eine vorgegebene Zeitdauer (T) an einen Empfänger übertragen wird, wobei einzelne Signale als Signalblöcke zeitlich aufeinanderfolgen.

Derartige Verfahren werden beispielsweise in der Powerline-Übertragungstechnik angewandt. Dort wird versucht durch geeignete Codierung und Modulation der zu übertragenden Daten, diese uni- oder bidirektional über das Wechselstromnetz an Empfänger zu übertragen. Hierzu stehen in Europa gemäß der Norm CENELEC EN 50065 die Bänder A bis D zur Verfügung, die die folgenden Frequenzbereiche abdecken: 9-95 bzw. 95-125 bzw. 125-140 bzw. 140-148,5 kHz. In den USA oder in Japan sind Frequenzbereiche bis ca. 500 kHz verfügbar. Da nahezu alle Haushalte und Gebäude an Stromnetze angeschlossen sind, ist eine Datenübertragung per Powerline erstrebenswert und spart das zusätzliche Verlegen von Zweidrahtleitungen, Koaxialkabeln oder Lichtleitfasern ein. Beispielsweise lassen sich über Schalter, Sensoren oder Aktoren elektrische Geräte wie Zentralheizung, Klima- und Beleuchtungsanlagen oder Maschinen, automatisch bedienen, steuern und überwachen. Hierzu wird das zur Energieübertragung bei 50 Hz bestehende Stromnetz zur Übertragung hochfrequenter Signale verwendet. Problematisch hierbei sind die unterschiedlichen Eigenschaften der Leitungen bei den verschiedenen Hochfrequenzen, die Leitungsverluste sowie die örtlich variierenden Eigenschaften des Übertragungsmediums. Innerhalb der erlaubten Bänder der europäischen Norm steigt die Zugangsimpedanz für die eingespeisten Signale mit sinkender Frequenz. Ein weitere Schwierigkeit ergibt sich aus den mannigfaltigen Störsignalen in den Stromnetzen. Insbesondere bei tiefen Frequenzen besteht ein starkes breitbandiges Rauschen. Fernsehgeräte, Computer und Rundfunksender verursachen schmalbandige Störungen hoher Leistungsdichte. Hinzu kommen Impulsstörungen, die von Ein- und Ausschaltvorgängen herrühren und Spannungsspitzen im kV-Bereich aufweisen. Ihr Störspektrum reicht aufgrund der steilen Anstiegs- und Abfallflanken bis weit in den MHz-Bereich.

Untersucht werden derzeit Übertragungssysteme für Stromnetze mit Datenraten in der Größenordnung von mehreren Mbit/s, die Bandbreiten von mehreren MHz nutzen. Erstrebenswert ist jedoch eine hohe Datenübertragungsrate bei Nutzung der Frequenzbänder der europäischen Norm.

Zur Telekommunikation über Energieverteilnetze ist ein Verfahren bekannt (Intellon Corporation, 1998, White Paper #0032, IeOFDM High Speed No New Wires, Revision 2.0, htt-p://www.intellon.com), bei dem Daten mit einem bekannten orthogonalen Frequenzmultiplexverfahren (OFDM) über Wechselstromleitungen übertragen werden. Hierzu wird das verfügbare Frequenzspektrum in viele schmalbandige Bereiche zerlegt, in denen jeweils Daten mittels Phasenmodulation einer Trägerfrequenz codiert werden. Die OFDM-Modulation wird mit einem Schnellen-Fourier-Transformations(FFT)-Prozessor erzeugt, wobei durch anschließende inverse Fouriertransformation das Zeitsignal erhalten wird. Durch Kopieren eines einige Mikrosekunden dauernden Signalabschnitts des Signalendes an den Signalanfang entsteht der zu übertragende Signalblock. Die Länge des kopierten Abschnitts hängt jeweils von der Reflexionsdauer des Ursprungssignals im Übertragungskanal ab. Mittels des Kopiervorgangs soll eine Interferenz des ursprünglichen Signalblocks mit den zeitverzögerten Reflexionen desselbigen vermieden werden können. Die erreichten Übertragungsraten sollen 10 Mbit/s in einem Frequenzband oberhalb 2 MHz betragen.

Bei diesem bekannten Telekommunikationsverfahren erweist sich gerade der Kopiervorgang als nachteilig, da er innerhalb eines Signalblocks zu einem sprunghaften Übergang an der Nahtstelle führt, wie dies auch beim Aneinanderreihen der einzelnen Signalblöcke der Fall ist. Diese Sprünge im Zeitbereich führen zu Anteilen im Frequenzbereich, die sich dort anderen Trägerfrequenzen überlagern können sowie außerhalb des erlaubten Frequenzbandes Störungen verursachen. Zudem variiert die Reflexionsdauer in den Übertragungskanälen und damit auch die Länge des zu kopierenden Signalabschnitts.

Aufgabe der vorliegenden Erfindung ist es, ein Datenübertragungsverfahren insbesondere für Stromnetze anzugeben, das in schmalen Frequenzbändern mit hoher Datenübertragungsrate arbeitet, ohne außerhalb des verwendeten Frequenzbandes Störungen zu verursachen. Insbesondere müssen länderspezifische Normen eingehalten werden.

Diese Aufgabe wird durch die Merkmale des Patentanspruchs 1 oder 14 gelöst. Vorteilhafte Ausgestaltungen ergeben sich aus den Unteransprüchen.

Erfindungsgemäß wird jedes Signal vor der Übertragung mit einer Fensterfunktion multipliziert, wobei die so entstehenden Signalblöcke zeitlich nacheinander übertragen werden. Die Fensterfunktion darf das Signal nicht an den Randbereichen abschneiden, da Sprungstellen soweit als möglich vermieden werden müssen, wenn hochfrequente Störanteile eliminiert werden sollen. Erfindungsgemäß muß deshalb eine Fensterfunktion gewählt werden, deren Fouriertransformierte im Absolutbetrag die folgenden Eigenschaften erfüllt: An den verwendeten Trägerfrequenzen müssen jeweils Nullstellen vorliegen und die Nebenmaxima müssen im Vergleich zum Hauptmaximum (bei der Frequenz 0) eine Dämpfung von mindestens -30 dB aufweisen. Durch die erste Bedingung ist gewährleistet, daß Orthogonalität für die verwendeten Trägerfrequenzen besteht, d.h. das sich ergebende, eine Linearkombination aus auf die Trägerfrequenzen verteilten harmonischen Funktionen darstellende Signal ist ohne gegenseitige Beeinflussung der jeweiligen Funktionen und damit Träger zusammengesetzt und läßt sich folglich wieder eindeutig in die einzelnen Trägeranteile zerlegen. Die zweite Bedingung stellt sicher, daß außerhalb des Trägerfrequenzbereiches ein schneller Abfall des Leistungsspektrums stattfindet. Dies erlaubt insbesondere die Einhaltung von Normvorschriften bei der Verwendung bestimmter Frequenzbereiche auf Stromnetzen.

Das Aneinanderfügen von Signalblöcken einer bestimmten Zeitdauer im Zeitbereich entspricht der Multiplikation eines Signals mit einem Rechteckfenster der Zeitdauer T, wobei anschließend die entstehenden Signalblöcke zeitlich aneinandergehängt werden. Die Multiplikation im Zeitbereich entspricht einer Faltung im Frequenzbereich. Die verursachten Störungen im Frequenzbereich sind um so geringer, je, größer das Rechteckfenster im Zeitbereich gewählt wird. Bei dem bekannten Intellon-Verfahren führt das Kopieren eines schmalen Zeitsignalabschnitts daher zu breitbandigen Störungen.

Ein Rechteckfenster der Zeitdauer T besitzt im Frequenzbereich bei den Vielfachen des Wertes 1/(2 x T) jeweils Nulldurchgänge, an deren Stellen die Trägerfrequenzen gelegt werden können, ohne daß sich die Informationen der anderen Träger überlagern. Nachteilig bleibt jedoch die Tatsache, daß die durch das Rechteckfenster erzeugten hochfrequenten Anteile nur sehr langsam gedämpft werden. Dies führt zu den erwähnten Störfrequenzen außerhalb des benutzten Frequenzbandes und damit zu einer Unverträglichkeit mit der Norm.

Erfindungsgemäß muß deshalb ein Fenster verwendet werden, das innerhalb des erlaubten Frequenzbandes möglichst viele Nullstellen besitzt, um die Anzahl der Träger nicht zu beschränken und das außerdem eine starke Dämpfung, die mindestens -30 dB außerhalb des Hauptmaximums betragen muß, aufweist. Um diese Bedingungen zu erfüllen, kann auch nur jede zweite der bei einem Rechteckfenster in Frage kommenden Trägerfrequenzen genutzt werden, wenn dadurch die Dämpfungsbedingung eingehalten werden kann. Insbesondere wünschenswert sind Dämpfungen, die bereits ab dem zweiten Nebenmaximum bei wenigstens -50 bis -60 dB liegen.

Eine mögliche Fensterfunktion kann durch die folgende Formel dargestellt werden:

$$\text{window}(n) = c_0 + \sum_{i=1}^{I} c_i \cos\left( (2i - 1)2\pi \frac{(n + 0,5)}{\text{NFFT}} \right)$$

Hierin stellt NFFT die Anzahl der für die inverse Fouriertransformation bei der Signalerzeugung verwendeten Punkte dar. n läuft von O bis (NFFT-1) entsprechend dem Zeitintervall von $t_0$ bis $t_0$ + T. Die Koeffizienten $c_i$ können so gewählt werden, daß die Fouriertransformierte dieser Funktion möglichst schnell abfällt und bereits bei dem zweiten Nebenmaximum eine Dämpfung von mindestens -50 dB aufweist. Für I = 2 lassen sich diese Koeffizienten wie folgt angeben:

$$c_0 = 0,5093$$

$$c_1 = -0,4941$$

$$c_2 = 0,0059$$

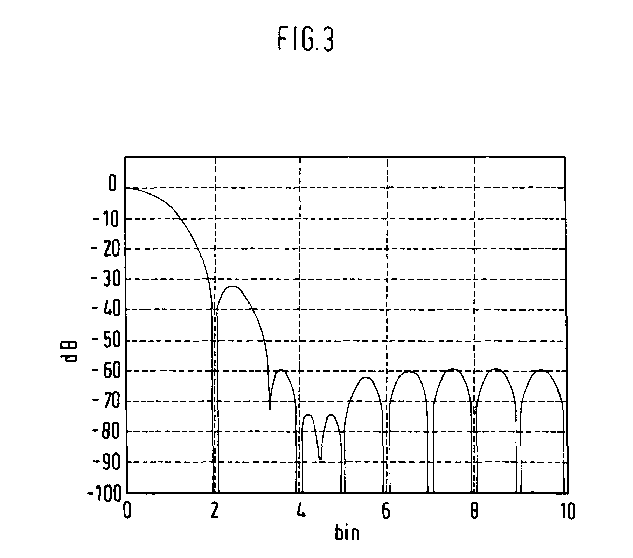

Dieses Fenster (in Figur 3 dargestellt) erfüllt zumindest bei jeder zweiten Trägerfrequenz (im Vergleich zum Rechteckfenster) die Orthogonalitätsbedingung. Die Dämpfungsbedingung wird ebenfalls erfüllt, wobei bereits das zweite Nebenmaximum auf -59 dB abgefallen ist.

Bei dem erfindungsgemäßen Datenübertragungsverfahren werden die Daten vorteilhaft mittels Quadraturamplitudenmodulation (QAM) in Kombination mit OFDM moduliert. Hierbei können 2, 4, 8, 64, 128, 256 usf. Informationen durch Phasen- und/oder Amplitudenmodulation codiert werden, wobei bei einer 256-QAM 8 Bits pro Träger codiert sind. Günstig ist es hierbei, die Informationen im komplexen Raum äquidistant auf benachbarte Quadrate zu verteilen, deren Größe von der Phasen- und Amplitudenunschärfe des Übertragungsweges vorgegeben ist.

Das erfindungsgemäße Verfahren läßt sich insbesondere zur Übertragung von Daten im B- und D-Band der Cenelec-Norm einsetzen. Die Signale können dann beispielsweise im Niederspannungsverteilnetz übertragen werden, wobei eine "hausinterne" Datenübertragung besonders günstig ist.

Es ist vorteilhaft, das Signal mittels eines digitalen Signalprozessors im Frequenzraum zu erzeugen, es durch inverse Fouriertransformation in den Zeitraum zu transformieren, wobei es dort mit dem erfindungsgemäßen Zeitfenster multipliziert und anschließend mittels eines Digital/Analogwandlers derart gewandelt wird, um es in den Übertragungsträger einspeisen zu können. Dieses Verfahren erlaubt eine hohe Übertragungsrate aufgrund der sehr schnell durchführbaren Fouriertransformationen und damit eine Telekommunikation in Echtzeit.

Da die erzeugten Signalblöcke am Anfang und am Ende wenig Energie enthalten, können diese überlappt werden, um die Anzahl der Blöcke pro Sekunde zu erhöhen. Damit läßt sich leicht eine der ISDN-Rate vergleichbare Datenübertragungsrate erzielen.

Das erfindungsgemäße Verfahren läßt sich neben der unidirektionalen auch für die bidirektionale Datenübertragung nutzen, indem die Anzahl der Trägerfrequenzen auf einen Sende- und auf einen Rückkanal aufgeteilt werden. Vorteilhaft ist daneben ein weiterer Synchronisationskanal, für den eine Trägerfrequenz reserviert werden kann. Der Synchronisationskanal ermöglicht es, mehrere Stationen dauerhaft zu synchronisieren, ohne daß eine geringe Quarzdrift langfristig zu großen Abweichungen führt.

Je nach Art der Datenübertragung kann es notwendig sein, Daten in Echtzeit, also ohne Verzögerungen zu übertragen (z.B. Telefonie) oder die Daten zuverlässig und fehlerfrei binär zu übermitteln, wobei Verzögerungen in Kauf genommen werden können. Zur Fehlerkorrektur können die insgesamt zu übertragenden Daten in zwei Pakete aufgeteilt werden, wobei eine Anzahl von Bits als Kontrollbits verwendet werden. Vorteilhaft ist hier die Verwendung von BCH-Codes.

Bei Verwendung eines Sende- und Rückkanals läßt sich die Datenübertragungsrate erhöhen, wenn beide Kanäle jeweils über dieselben Trägerfrequenzen verfügen. Voraussetzung hierfür ist eine reflexionsarme Übertragungsstrecke.

Eine weitere Möglichkeit der Datenübertragung besteht darin, jedes Signal vor der Übertragung einen digitalen Filter durchlaufen zu lassen, dessen Übertragungsfunktion außerhalb der jeweils verwendeten Frequenzbänder eine Dämpfung von mindestens -30 dB aufweist, wobei alle Träger innerhalb des erlaubten Bandes - statt jedes zweiten bei der Fenstertechnik - verwendet werden können, wodurch die Datenrate verdoppelt wird. Der digitale Filter arbeitet linearphasig, d.h. er besitzt symmetrische Koeffizienten ($c_{-k} = c_k$) und besitzt eine ungerade Anzahl von Koeffizienten ($k = -m,...,0,...m$). Da bei Verwendung eines digitalen Filters der Signalblock zeitlich verlängert wird, dürfen die einzelnen Blöcke nicht unmittelbar zeitlich aufeinanderfolgend übertragen werden. Es zeigt sich als vorteilhaft, etwa 10% der Blocklänge als zeitlichen Abstand zwischen den Signalblöcken zu wählen. Bei der Wahl der Filterkoeffizienten ist die Dämpfungsbedingung, d.h. eine starke Dämpfung außerhalb der verwendeten Frequenzbänder, sowie die Orthogonalitätsbedingung, d.h. das Vermeiden einer gegenseitigen Beeinflussung der Träger, zu beachten.

Beim Vergleich der beiden erfindungsgemäßen Datenübertragungsverfahren durch Anwenden einer Fensterfunktion bzw. durch digitale Filterung der jeweiligen Signalblöcke läßt sich folgendes feststellen: die digitale Filtertechnik erfordert mehr Rechenaufwand als die Fenstertechnik, außerdem kann das Orthogonalitätserfordernis nicht vollständig erfüllt werden. Andererseits kann die doppelte Anzahl von Trägerfrequenzen genutzt werden und auch bei niedrigen Signal-zu-Rausch-Verhältnissen auf dem Übertragungsweg eine zuverlässige Datenübertragung realisiert werden. Schließlich können die Signalblöcke bei der Fenstertechnik zeitlich überlappt werden, während sie bei der digitalen Filtertechnik zeitlich verlängert sind.

Im folgenden soll ein Ausführungsbeispiel die Erfindung näher erläutern.

Figur 1 zeigt schematisch einen für die erfindungsgemäße Datenübertragung über Stromnetze geeigneten Aufbau,
Figur 2 zeigt das Fourier-Spektrum eines Rechteck-Fensters,
Figur 3 zeigt das Fourier-Spektrum einer erfindungsgemäßen Fensterfunktion und
Figur 4 zeigt die Koeffizienten $c_k$ eines erfindungsgemäßen Digitalfilters.

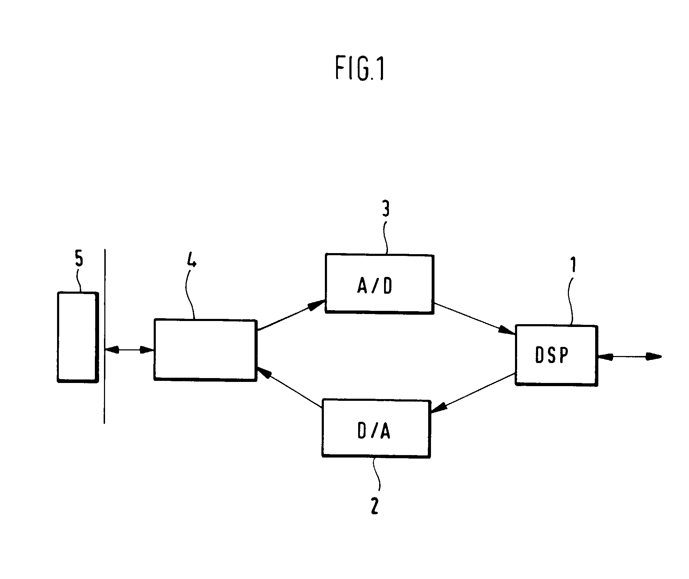

Figur 1 zeigt schematisch eine Anordnung zur erfindungsgemäßen Datenübertragung in einem Stromnetz 5. Die von einem digitalen Signalprozessor (DSP) 1 kodierten und modulierten Daten werden von einem DA-Wandler 2 mit hoher Abtastrate über einen Übertrager 4 in das Stromnetz 5 eingespeist. Auf der Empfangsseite werden die empfangenen Signale von einem AD-Wandler 3 in digitaler Form dem Signalprozessor 1 zugeführt, wo sie demoduliert und dekodiert werden.

Die Nutzdaten werden dem Signalprozessor 1 übertragen, wo sie mittels eines QAM-OFDM-Verfahrens beispielsweise mit einer Genauigkeit von 8 Bits digitalisiert werden (256-QAM). Die Modulation erfolgt vorteilhafterweise dadurch, daß jedem der 256 Werte im komplexen Raum Amplituden- und Phasenwerte derart zugeordnet werden, daß die Werte dort äquidistante Gitterpunkte bilden. Der Abstand zweier Punkte ist durch die Qualität des Übertragungskanals gegeben, d.h. bei geringem Signalrauschen und bei geringen Änderungen der Kanaleigenschaft längs des Übertragungsweges können die Punkte enger benachbart liegen, ohne daß durch die Übertragung eine Verschmierung der Punkte in einer Weise erfolgen würde, die zu einer Fehlzuordnung beim Dekodieren führen kann. Durch Amplituden- und Phasenmodulation können auf diese Weise acht Bits auf eine Trägerfrequenz moduliert werden.

Im vorliegenden Ausführungsbeispiel sollen die B- und D- Bänder der CENELEC-Norm mit einer Gesamtbandbreite von 38,5 kHz zur Datenübertragung verwendet werden. Die höchste nutzbare Frequenz $f_{max}$ ist dann 148,5 kHz, so daß der DA-Wandler 2 mit einer Abtastfrequenz von über 300 kHz betrieben werden muß. Die Ausgangsspannung des DA-Wandlers 2 ist eine Treppenfunktion, die periodisch auftretende Hochfrequenzanteile enthält. Bei einer Abtastrate $f_a$ beginnt der erste Hochfrequenzanteil bei der Frequenz $f_a$-$f_{max}$. Diese Frequenzanteile fallen jedoch proportional 1/f ab. Es bietet sich daher an, die Abtastfrequenz höher zu wählen, um die durch den DA-Wandler 2 verursachten Störfrequenzen gering zu halten. Im vorliegenden Fall kann $f_a$ = 768 kHz gewählt werden.

Die auf verschiedene Trägerfrequenzen aufgeteilte Nutzinformation wird durch inverse Fourier-Transformation in einen Signalblock (im Zeitraum) transformiert, wobei die Fourier-Transformation über NFFT-Punkte erfolgt. Als Länge werden vorteilhaft mindestens 512 oder 1024 oder mehr Punkte gewählt; im vorliegenden Fall ist NFFT = 40,96. Bei vorgegebener Abtastfrequenz $f_a$ ergibt sich daraus für den Abstand der Trägerfrequenzen df = $f_a$/NFFT. Der Kehrwert des Abstandes df entspricht der Länge des Signalblocks, die im vorliegenden Fall 5,3 ms beträgt. Bei Blockdauern von bis zu maximal 30 ms läßt sich in der Telefonie noch von einer Übertragung in Echtzeit sprechen. Die durch den Abstand df festgelegten diskreten Frequenzen ("Bins") stellen Frequenzen dar, an denen das Fourier-Spektrum des durch eine Rechteckfunktion abgeschnittenen Signalblocks jeweils Nullstellen aufweist. Im vorliegenden Fall würde sich eine Trägeranzahl von etwa 204 ergeben.

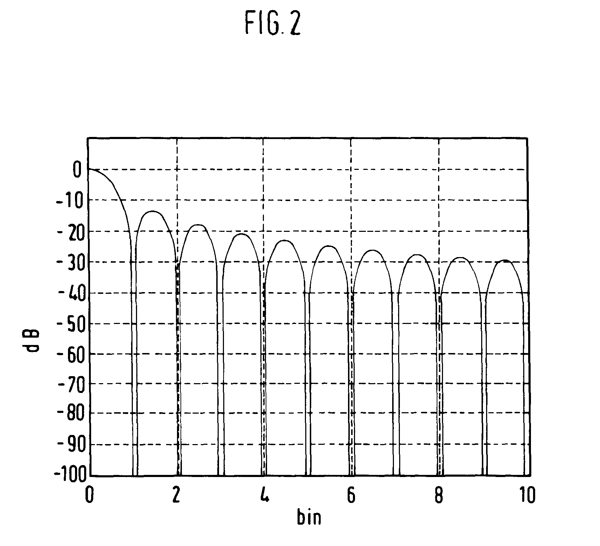

Ein durch ein Rechteckfenster abgeschnittener Signalblock läßt sich zur Datenübertragung innerhalb eines bestimmten Frequenzbandes in der Praxis nicht einsetzen, da - wie in Figur 2 veranschaulicht - der Leistungsabfall zu höheren Frequenzen zu gering ist. Die europäische Norm schreibt außerhalb des verwendeten Frequenzbandes einen starken Leistungsabfall vor, d.h. das Leistungsspektrum auftretender Störfrequenzen muß steil abfallen. Dies könnte durch eine starke Begrenzung der Trägerfrequenzen erreicht werden, etwa indem nur Trägerfrequenzen mit einem genügend weiten Abstand von den Grenzen des Frequenzbandes gewählt würden. Dadurch sänke jedoch die Datenübertragungsrate auf unbrauchbare Werte.

Erfindungsgemäß wird deshalb vorgeschlagen, den Signalblock mit einer Fensterfunktion zu multiplizieren, deren Fouriertransformierte an den verwendeten Trägerfrequenzen jeweils einen Nulldurchgang besitzt und Nebenmaxima mit einer zunehmenden Dämpfung von mindestens -30 dB in Relation zum Hauptmaximum aufweist. Hierdurch ist sichergestellt, daß die höchste verwendete Trägerfrequenz außerhalb des erlaubten Frequenzbandes nur sehr schwache und mit der Frequenz stark abfallende Störungen verursacht. Die Forderung nach Nullstellen an den verwendeten Trägerfrequenzen sichert die bereits oben besprochene Orthogonalität des Systems.

Bei der Wahl des geeigneten Fensters kann es notwendig und vorteilhaft sein, nur jedes zweite Bin als Trägerfrequenz zu nutzen. Figur 3 zeigt das Fourier-Spektrum einer besonders vorteilhaften Fensterfunktion

$$\text{window}(n) = c_0 + \sum_{i=1}^{I} c_i \cos\left((2i-1)2\pi\frac{(n+0,5)}{\text{NFFT}}\right)$$

n = 0 bis NFFT - 1. Für I = 2 sind die Koeffizienten $c_i$:$c_0$ = 0,5093; $c_1$ = -0,4941 und $c_2$ = 0,0059.

Bei Verwendung dieses Zeitfensters zeigt sich, daß Anfang und Ende der jeweiligen Signalblöcke im Zeitraum wenig Energie enthalten. Die Signalblöcke lassen sich demnach zur Erhöhung der Datenübertragungsrate überlappen. Beispielsweise beträgt die Datenübertragungsrate bei Verwendung der genannten Fensterfunktion, die zu einer Halbierung der verwendbaren Träger führt, etwa 153 kbit/s. Diese Datenübertragungsrate kann aufrechterhalten werden, auch wenn die Zahl der Träger des Sendekanals auf 96 reduziert wird, wobei Trägerfrequenzen für einen Rück- und einen Synchronisationskanal belegt werden, wenn die Überlappung der Signalblöcke ca. 6% beträgt.

Das erfindungsgemäße Datenübertragungsverfahren erlaubt ISDN-Datenübertragungsraten auf dem Stromnetz. Die Einspeisung erfolgt mittels eines Übertragers 4, der bidirektional arbeitet und die galvanische Trennung vom Netz übernimmt. Die Netzfrequenz von 50 Hz wird gefiltert, während für die verwendeten Frequenzbänder eine gute Durchlaßcharakteristik besteht.

Auf der analogen Empfangsseite ist es günstig, mittels eines analogen Bandpaßfilters auftretende Netzstörungen unterhalb und oberhalb der Frequenzbänder zu unterdrücken. Dies erhöht den Dynamikbereich des AD-Wandlers 3 und die Datensicherheit.

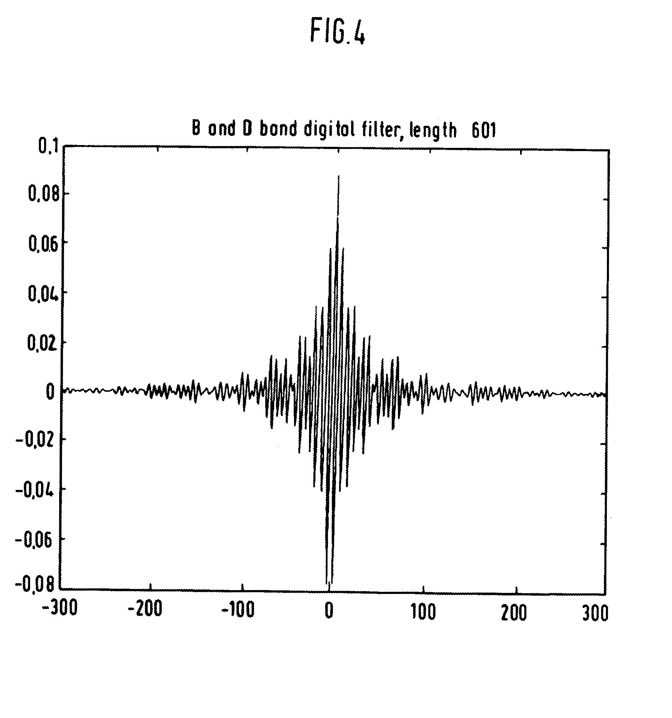

Bei einer anderen Ausführungsform des erfindungsgemäßen Datenübertragungsverfahrens wird anstelle eines Zeitfensters ein digitaler Filter verwendet, der außerhalb der jeweils genutzten Frequenzbänder eine Dämpfung von mindestens -30 dB aufweist. Hierzu werden die binär kodierten Daten in einem Schieberegister verzögert und mit einer festgelegten Koeffizientenfolge gewichtet. Dieser Vorgang läßt sich mathematisch als Faltung im Zeitraum darstellen, was einer Multiplikation im Frequenzraum entspricht. Um die Signalphase unverändert zu erhalten, wird ein Digitalfilter mit symmetrischen Koeffizienten $c_k = c_{-k}$ der Länge m (k = 0,...,m) verwendet, so daß die Gesamtlänge ungerade ist. Geeignete Koeffizienten für m = 300 sind in der Figur 4 dargestellt und im einzelnen spaltenweise in umseitiger Tabelle wiedergegeben:

| | | |
|---|---|---|
| -5.7206581e-004 | -1.8883509e-004 | -1.3812248e-003 |
| -2.4501353e-004 | -1.1491986e-004 | 1.1924051e-003 |
| -1.9397956e-004 | 8.8512726e-005 | 2.0450193e-003 |
| -6.5246694e-004 | 3.9113510e-004 | -4.9091997e-005 |
| -1.1427863e-003 | 5.9976039e-004 | -2.5300484e-003 |
| -5.8692698e-004 | 4.0720712e-004 | -2.1355571e-003 |
| 5.8269472e-004 | -3.1645605e-004 | 1.0359616e-003 |
| 1.2625981e-003 | -1,1299172e-003 | 3.4686463e-003 |
| 5.8568205e-004 | -1.2054011e-003 | 2.3017076e-003 |
| -6.9169227e-004 | -1.3528925e-004 | -1.3033846e-003 |
| -1.3468396e-003 | 1.3548552e-003 | -3.5122424e-003 |
| -7.5528505e-004 | 1.8587274e-003 | -2.1850732e-003 |
| 2.9639892e-004 | 6.7259262e-004 | 9.0952017e-004 |
| 8.0151216e-004 | -1.2585072e-003 | 2.4627466e-003 |
| 3.9699620e-004 | -2.1189607e-003 | 1.4310228e-003 |
| -2.4808942e-004 | -1.0485711e-003 | -2.7456300e-004 |
| -4.7205069e-004 | 8.8546085e-004 | -6.5254342e-004 |
| -1.6871675e-004 | 1.7906968e-003 | -5.8866178e-005 |
| 1.1954296e-004 | 9.3185602e-004 | -1.9595068e-004 |
| 4.8294918e-005 | -5.6125928e-004 | -1.2983829e-003 |
| -2.6101927e-004 | -1.0835291e-003 | -1.5613938e-003 |
| -3.3020368e-004 | -3.4888234e-004 | 2.7904244e-004 |
| -2.0472460e-005 | 4.5184378e-004 | 2.6880755e-003 |
| 3.8970417e-004 | 2.6345840e-004 | 2.7515699e-003 |
| 4.3834266e-004 | -5.2915829e-004 | -1.6720590e-004 |
| 6.4005096e-005 | -6.666764e-004 | -3.1712000e-003 |
| - 4.2309072e-004 | 2.6816522e-004 | -2.9545126e-003 |
| -6.0175596e-004 | 1.2272745e-003 | 2.5905611e-004 |
| -3.8739820e-004 | 9.5649248e-004 | 2.8301079e-003 |
| 4.6138426e-005 | -3.9611280e-004 | 1.9674523e-003 |
| 4.2118721e-004 | -1.3997825e-003 | -9.6554591e-004 |
| 5.8352086e-004 | -1.0289918e-003 | -2.1774708e-003 |
| 4.1354023e-004 | 1.5662340e-004 | -1.8044619e-004 |
| -8.3048494e-005 | 8.2505934e-004 | 2.3128749e-003 |
| -6.9646685e-004 | 5.3771481e-004 | 1.7537382e-003 |
| -9.4469312e-004 | 1.1916883e-004 | -1.6618783e-003 |
| -4.9207857e-004 | 2.8313819e-004 | -3.9116903e-003 |
| 4.5243859e-004 | 5.0755568e-004 | -1.8681748e-003 |
| 1.1160296e-003 | -1,9499312e-004 | 2.7500891e-003 |
| 8.7905292e-004 | -1.5439576e-003 | 5.0320083e-003 |
| -1.0826943e-004 | 1.8485719e-003 | 2.3383240e-003 |
| -9.7689600e-004 | -5.3147447e-005 | -2.7012508e-003 |
| -1.0076075e-003 | 2.4508758e-003 | -5.0632262e-003 |
| -2.7389275e-004 | 2.9141738e-003 | -2.6853982e-003 |
| 4.8580966e-004 | 3.8026469e-004 | 1.6806345e-003 |
| 6.8226971e-004 | -2.7916382e-003 | 3.8149135e-003 |
| 3.4582014e-004 | -3.2553461e-003 | 2.3947188e-003 |
| -5.8753882e-005 | -4.4836932e-004 | -3.5753938e-004 |
| -2.2054644e-004 | 2.6046884e-003 | -1.7500720e-003 |
| -1.7985551e-004 | 2.6526237e-003 | -1.3548594e-003 |
| -1.4035916e-004 | -8.6796412e-005 | -5.5586116e-004 |

(fortgesetzt)

| | | |
|---|---|---|
| - 1.6534956e-004 | -2.2532074e-003 | -2.7455280e-004 |
| -6.4515341e-005 | -3.4765908e-003 | -1.1065689e-002 |
| 6.5572114e-004 | -1.0152386e-003 | 7.0746314e-003 |
| 1.3769471e-003 | 6.5120155e-004 | 2.2883681e-002 |
| 1.1107223e-003 | -7.9285955e-004 | 1.7424102e-002 |
| -1.3390026e-004 | -2.3296775e-003 | -6.8088693e-003 |
| -1,1816987e-003 | -2.5193695e-004 | -2.5604719e-002 |
| -1.1320028e-003 | 3.9964971e-003 | -1.8902197e-002 |
| -4.1494368e-004 | 4.9910828e-003 | 6.0803642e-003 |
| -2.9049744e-005 | 4.4074492e-004 | 2.2271718e-002 |
| -6.7042618e-005 | -5.0865625e-003 | 1.3345950e-002 |
| 3.2018846e-004 | -5.2996085e-003 | -7.9739034e-003 |
| 1.4046909e-003 | -8.5335508e-005 | -1.5674439e-002 |
| 1.9834104e-003 | 4.1126968e-003 | -1.7299670e-003 |
| 6.6707031e-004 | 2.4505713e-003 | 1.4515715e-002 |
| - 2.0471120e-003 | -1.9603620e-003 | 1.0351959e-002 |
| -3.6800139e-003 | -2.1542202e-003 | -1.1607475e-002 |
| -2.2310198e-003 | 2.9227786e-003 | -2.4939977e-002 |
| 1.4561693e-003 | 5.9698528e-003 | -1.0296811e-002 |
| 4.2173485e-003 | 5.7764499e-004 | 2.0388998e-002 |
| 3.5902392e-003 | -8.9828325e-003 | 3.5179737e-002 |
| 1.3674443e-004 | -1.0942025e-002 | 1.6636875e-002 |
| -3.2399812e-003 | -1.8830792e-004 | -1.9126937e-002 |
| -4.0128055e-003 | 1.3507623e-002 | -3.9204227e-002 |
| -1.9552554e-003 | 1.4848815e-002 | -2.6642377e-002 |
| 1.1734858e-003 | 6.4794904e-004 | 5.8209885e-003 |
| 3.2486644e-003 | -1.5026286e-002 | 3.1649699e-002 |
| 3.0845921e-003 | -1.5630872e-002 | 3.4582266e-002 |
| 9.0191449e-004 | -6.9023696e-004 | 1.6580750e-002 |
| -1.8096614e-003 | 1.3505080e-002 | -1.0701205e-002 |
| -3.0654354e-003 | 1.2306193e-002 | -3.4299867e-002 |
| -1.8578166e-003 | -1.0696838e-003 | -4.0916315e-002 |
| 7.0153293e-004 | -1.0317448e-002 | -2.0320220e-002 |
| 2.1274065e-003 | -5.7111228e-003 | 2.2240257e-002 |
| 1.0884861e-003 | 5.0357831e-003 | 5.8949238e-002 |
| -9.1262107e-004 | 7.3462861e-003 | 5.3462860e-002 |
| -1.0940983e-003 | -1.7374073e-003 | 4.0568396e-004 |
| 1.0900254e-003 | -1.0048169e-002 | -6.2440440e-002 |
| 2.7491191e-003 | -5.8465670e-003 | -7.8841479e-002 |
| 8.1375007e-004 | 7.0836600e-003 | -2.7674439e-002 |
| -3.6373661e-003 | 1.3621376e-002 | 5.0944518e-002 |
| -5.5929817e-003 | 5.6048436e-003 | 8.8338567e-002 |
| -1.6275432e-003 | -8.3111476e-003 | 5.0944518e-002 |
| 5.3088262e-003 | -1.3134057e-002 | -2.7674439e-002 |
| 8.0829991e-003 | -5.0698099e-003 | -7.8841479e-002 |
| 3.0355823e-003 | 5.3332189e-003 | -6.2440440e-002 |
| -5.3823460e-003 | 7.2692955e-003 | 4.0568396e-004 |
| -8.8342702e-003 | 2.3291441e-003 | 5.3462860e-002 |
| -3.9691962e-003 | -4.6569256e-005 | 5.8449238e-002 |
| 3.9988673e-003 | 2.9559234e-003 | 2.2240257e-002 |
| 7.1475487e-003 | 3.4460166e-003 | -2.0320220e-002 |

(fortgesetzt)

| | | |
|---|---|---|
| 3.3844692e-003 | -4.7767276e-003 | -4.0916315e-002 |
| -2.0730409e-003 | -1.4357897e-002 | -3.4299867e-002 |
| -1.0701205e-002 | 1.3505080e-002 | -1.8096614e-003 |
| 1.6580750e-002 | -6.9023696e-004 | 9.0191449e-004 |
| 3.4582266e-002 | -1.5630872e-002 | 3.0845921e-003 |
| 3.1649699e-002 | -1.5026286e-002 | 3.2486644e-003 |
| 5.8209885e-003 | 6.4794904e-004 | 1.1734858e-003 |
| -2.6642377e-002 | 1.4848815e-002 | -1.9552554e-003 |
| -3.9204227e-002 | 1.3507623e-002 | -4.0128055e-003 |
| -1.9126937e-002 | -1.8830792e-004 | -3.2399812e-003 |
| 1.6636875e-002 | -1.0942025e-002 | 1.3674443e-004 |
| 3.5179737e-002 | -8.9825325e-003 | 3.5902392e-003 |
| 2.0388998e-002 | 5.7764499e-004 | 4.2173485e-003 |
| -1.0296811e-002 | 5.9698528e-003 | 1.4561693e-003 |
| -2.4939977e-002 | 2.9227786e-003 | -2.2310198e-003 |
| -1.1607475e-002 | -2.1542202e-003 | -3.6800139e-003 |
| 1.0351959e-002 | -1.9603620e-003 | -2.0471120e-003 |
| 1.4515715e-002 | 2.4505713e-003 | 6.6707031e-004 |
| -1.7299670e-003 | 4.1126968e-003 | 1.9834104e-003 |
| -1.5674439e-002 | -8.5335508e-005 | 1.4046909e-003 |
| -7.9739034e-003 | -5.2996085e-003 | 3.2018846e-004 |
| 1.3345950e-002 | -5.0865625e-003 | -6.7042618e-005 |
| 2.2271718e-002 | 4.4074492e-004 | -2.9049744e-005 |
| 6.0803642e-003 | 4.9910825e-003 | -4.1494368e-004 |
| -1.8902197e-002 | 3.9964971e-003 | -1.1320028e-003 |
| -2.5604719e-002 | -2.5193695e-004 | -1.1816987e-003 |
| -6.8088693e-003 | -2.3296775e-003 | -1.3390026e-004 |
| 1.7424102e-002 | -7.9285955e-004 | 1.1107223e-003 |
| 2.2883681e-002 | 6.5120155e-004 | 1.3769471e-003 |
| 7.0746314e-003 | -1.0152386e-003 | 6.5572114e-004 |
| -1.1065689e-002 | -3.4765908e-003 | -6.4515341e-005 |
| -1.4357897e-002 | -2.0730409e-003 | -2.7455280e-004 |
| -4.7767276e-003 | 3.3844692e-003 | -5.5586116e-004 |
| 3.4460166e-003 | 7.1475487e-003 | -1.3548594e-003 |
| 2.9559234e-003 | 3.9988673e-003 | -1.7500720e-003 |
| -4.6569256e-005 | -3.9691962e-003 | -3.5753938e-004 |
| 2.3291441e-003 | -8.8342702e-003 | 2.3947188e-003 |
| 7.2692955e-003 | -5.3823460e-003 | 3.8149135e-003 |
| 5.3332189e-003 | 3.0355823e-003 | 1.6806345e-003 |
| -5.0698099e-003 | 8.0829991e-003 | -2.6853982e-003 |
| -1.3134057e-002 | 5.3088262e-003 | -5.0632262e-003 |
| -8.3111476e-003 | -1.6275432e-003 | -2.7012508e-003 |
| 5.6048436e-003 | -5.5929817e-003 | 2.3383240e-003 |
| 1.3621376e-002 | -3.6373661e-003 | 5.0320083e-003 |
| 7.0836600e-003 | 8.1375007e-004 | 2.7500891e-003 |
| -5.8465670e-003 | 2.7491191e-003 | -1.8681748e-003 |
| -1.0048169e-002 | 1.0900254e-003 | -3.9116903e-003 |
| -1.7374073e-003 | -1.0940983e-003 | -1.6618783e-003 |
| 7.3462861e-003 | -9.1262107e-004 | 1.7537382e-003 |
| 5.0357831e-003 | 1.0884861e-003 | 2.3128749e-003 |
| - 5.7111228e-003 | 2.1274065e-003 | -1.8044619e-004 |

(fortgesetzt)

| | | |
|---|---|---|
| -1.0317448e-002 | 7.0153243e-004 | -2.1774708e-003 |
| -1,0696838e-003 | -1.8578166e-003 | -9.6554591e-004 |
| 1.2306193e-002 | -3.0654354e-003 | 1.9674523e-003 |
| 2.8301079e-003 | 9.5649248e-004 | -3.8739820e-004 |
| 2.5905611e-004 | 1.2272745e-003 | -6.0175596e-004 |
| -2.9545126e-003 | 2.6816522e-004 | -4.2309072e-004 |
| -3.1712000e-003 | -6.6666764e-004 | 6.4005096e-005 |
| -1.6720590e-004 | -5.2915829e-004 | 4.3834266e-004 |
| 2.7515699e-003 | 2.6345840e-004 | 3.8970417e-004 |
| 2.6880755e-003 | 4.5184378e-004 | -2.0472460e-005 |
| 2.7904244e-004 | -3.4888234e-004 | -3.3020368e-004 |
| -1.5613938e-003 | -1.0835291e-003 | -2.6101927e-004 |
| -1.2983829e-003 | -5.6125928e-004 | 4.8294918e-005 |
| -1.9595068e-004 | 9.3185602e-004 | 1.1954296e-004 |
| -5.8866178e-005 | 1.7906968e-003 | -1.6871675e-004 |
| -6.5254342e-004 | 8.8546085e-004 | -4.7205069e-004 |
| -2.7456300e-004 | -1.0485711e-003 | -2.4808942e-004 |
| 1.4310228e-003 | -2.1189607e-003 | 3.9699620e-004 |
| 2.4627466e-003 | -1.2585072e-003 | 8.0151216e-004 |
| 9.0952017e-004 | 6.7259262e-004 | 2.9639892e-004 |
| -2.1850732e-003 | 1.8587274e-003 | -7.5528505e-004 |
| -3.5122424e-003 | 1.3548552e-003 | -1.3468396e-003 |
| -1.3033846e-003 | -1.3528925e-004 | -6.9169227e-004 |
| 2.3017076e-003 | -1.2054011e-003 | 5.8568205e-004 |
| 3.4686463e-003 | -1.1299172e-003 | 1.2625981e-003 |
| 1.0359616e-003 | -3.1645605e-004 | 5.8269472e-004 |
| -2.1355571e-003 | 4.0720712e-004 | -5.8692698e-004 |
| -2.5300484e-003 | 5.9976039e-004 | -1.1427863e-003 |
| -4.9091997e-005 | 3.9113510e-004 | -6.5246694e-004 |
| 2.0450193e-003 | 8.8512726e-005 | -1.9397956e-004 |
| 1.1924051e-003 | -1.1491986e-004 | -2.4501353e-004 |
| -13812248e-003 | -1.8883509e-004 | -5.7206581e-004 |
| -2.2532074e-003 | -1.6534956e-004 | |
| -8.6796412e-005 | -1.4035916e-004 | |
| 2.6526237e-003 | -1.7985551e-004 | |
| 2.6046884e-003 | -2.2054644e-004 | |
| -4.4836932e-004 | -5.8753882e-005 | |
| -3.2553461e-003 | 3.4582014e-004 | |
| -2.7916382e-003 | 6.8226971e-004 | |
| 3.8026469e-004 | 4.8580966e-004 | |
| 2.9141738e-003 | -2.7389275e-004 | |
| 2.4508758e-003 | -1.0076075e-003 | |
| -5.3147447e-005 | -9.7689600e-004 | |
| -1.8485719e-003 | -1.0826943e-004 | |
| -1.5439576e-003 | 8.7905292e-004 | |
| -1.9499312e-004 | 1.1160296e-003 | |
| 5.0755568e-004 | 4.5243859e-004 | |
| 2.8313819e-004 | -4.9207857e-004 | |
| 1.1916883e-004 | -9.4469312e-004 | |
| 5.3771481e-004 | -6.9646685e-004 | |
| 8.2505934e-004 | -8.3048494e-005 | |

(fortgesetzt)

| | |
|---|---|
| 1.5662340e-004 | 4.1354023e-004 |
| -1.0289918e-003 | 5.8352086e-004 |
| -1.3997825e-003 | 4.2118721e-004 |
| -3.9611280e-004 | 4.6138426e-005 |

Der verwendete Digitalfilter erlaubt es, jedes Bin als Trägerfrequenz zu benutzen, wobei die Orthogonalität so gut wie möglich gewahrt bleibt. Aufgrund der Charakteristik des Filters können die Dämpfungsbedingungen bei der Datenübertragung für Frequenzen außerhalb der erlaubten Frequenzbänder gut erfüllt werden. Da die Filterung zu einer zeitlichen Ausdehnung der Signalblöcke führt, ist im Gegensatz zur Verwendung eines Zeitfensters keine Überlappung möglich, sondern ein zeitlicher Abstand zwischen den Signalblöcken notwendig. Dieser beträgt etwa 10% der Blockdauer.

Die Verwendung von Digitalfiltern ist insbesondere dann von Vorteil, wenn das Signal/Rausch-Verhältnis des Übertragungskanals niedrig ist.

Die erfindungsgemäße Datenübertragung durch Anwendung einer Fensterfunktion bzw. eines Digitalfilters auf den zu übertragenden Signalblock erlaubt ISDN-Übertragungsraten bei Verwendung des Stromnetzes als Übertragungskanal unter Beibehaltung der europäischen Norm.

**Patentansprüche**

1.   Verfahren zur Datenübertragung, insbesondere in Stromnetzen, bei dem codierte Daten blockweise mittels eines orthogonalen Frequenzmultiplexverfahrens (OFDM) auf mehrere Trägerfrequenzen innerhalb eines oder mehrerer bestimmter Frequenzbänder moduliert werden und das durch inverse Fouriertransformation erhaltene, einem Datenblock entsprechende Signal für eine vorgegebene Zeitdauer (T) an einen Empfänger übertragen wird, wobei einzelne Signale als Signalblöcke zeitlich aufeinanderfolgen,

   dadurch **gekennzeichnet**, daß

   jedes Signal vor der Übertragung mit einer Fensterfunktion multipliziert wird, deren Fouriertransformierte im Absolutbetrag

   -   an den verwendeten Trägerfrequenzen jeweils einen Nulldurchgang besitzt und
   -   Nebenmaxima besitzt, die in Relation zum Hauptmaximum eine Dämpfung von mindestens -30 dB aufweisen.

2.   Verfahren nach Anspruch 1, dadurch gekennzeichnet, daß eine Fensterfunktion verwendet wird, deren Fouriertransformierte im Absolutbetrag an mindestens jeder zweiten als Träger in Frage kommenden Frequenz einen Nulldurchgang besitzt.

3.   Verfahren nach Anspruch 1 oder 2, dadurch gekennzeichnet, daß eine Fensterfunktion verwendet wird, deren Fouriertransformierte im Absolutbetrag Nebenmaxima besitzt, die ab dem zweiten Nebenmaximum in Relation zum Hauptmaximum eine Dämpfung von mindestens -50 dB bis -60 dB aufweisen.

4.   Verfahren nach einem der Ansprüche 1 bis 3, dadurch gekennzeichnet, daß als Fensterfunktion die durch

$$\text{window}(n) = c_0 + \sum_{i=1}^{I} c_i \cos\left( (2i-1) 2\pi \frac{(n+0,5)}{\text{NFFT}} \right)$$

gegebene Funktion verwendet wird, wobei

n = 0, ..., NFFT - 1
NFFT: Anzahl der für die inverse Fouriertransformation verwendeten Punkte und
im Falle von I = 2 die Koeffizienten $c_i$ wie folgt gewählt werden können: $c_0$ = 0,5093; $c_1$ = -0,4941; $c_2$ = 0,0059.

5.   Verfahren nach einem der Ansprüche 1 bis 4, dadurch gekennzeichnet, daß die Daten mittels Quadraturamplitudenmodulation (QAM) codiert sind.

**6.** Verfahren nach einem der Ansprüche 1 bis 5, dadurch gekennzeichnet, daß als Frequenzband ein oder mehrere Bänder der europäischen Norm (Cenelec EN 50065), insbesondere das B- und D-Band dieser Norm, im Bereich von 95-125 kHz bzw. 140-148,5 kHz, verwendet werden.

**7.** Verfahren nach einem der Ansprüche 1 bis 6, dadurch gekennzeichnet, daß die Signale im Niederspannungsverteilnetz übertragen werden.

**8.** Verfahren nach einem der vorhergehenden Ansprüche, dadurch gekennzeichnet, daß das Signal in einem digitalen Signalprozessor (DSP) im Frequenzraum erzeugt, durch inverse Fouriertransformation in dem Zeitraum transformiert, dort mit der Fensterfunktion multipliziert und anschließend mittels eines DA-Wandlers gewandelt und in den Übertragungsträger eingespeist wird.

**9.** Verfahren nach einem der vorhergehenden Ansprüche, dadurch gekennzeichnet, daß die Signalblöcke zeitlich überlappend übertragen werden.

**10.** Verfahren nach einem der vorhergehenden Ansprüche, dadurch gekennzeichnet, daß die Anzahl der Trägerfrequenzen auf einen Sende-, einen Rück- und einen Synchronisationskanal aufgeteilt werden.

**11.** Verfahren nach Anspruch 10, dadurch gekennzeichnet, daß für den Rück- und Synchronisationskanal jeweils eine Trägerfrequenz verwendet wird.

**12.** Verfahren nach einem der vorhergehenden Ansprüche, dadurch gekennzeichnet, daß die Daten eines Signalblocks fehlerkorrigiert werden, insbesondere durch eine BCH-Codierung.

**13.** Verfahren nach Anspruch 10, dadurch gekennzeichnet, daß Sende- und Rückkanal jeweils über mehrere unterschiedliche oder selbe Trägerfrequenzen verfügen.

**14.** Verfahren zur Datenübertragung, insbesondere in Stromnetzen, bei dem codierte Daten blockweise mittels eines orthogonalen Frequenzmultiplexverfahrens (OFDM) auf mehrere Trägerfrequenzen innerhalb eines oder mehrerer bestimmter Frequenzbänder moduliert werden und das durch inverse Fouriertransformation erhaltene, einem Datenblock entsprechende Signal für eine vorgegebene Zeitdauer (T) an einen Empfänger übertragen wird, wobei einzelne Signale als Signalblöcke zeitlich aufeinanderfolgen,
dadurch gekennzeichnet, daß
jedes Signal vor der Übertragung einen Digitalfilter durchläuft, der eine ungerade Anzahl von Koeffizienten $c_k$, $k = -m, ... 0,... ,m$ besitzt, wobei $c_{-k} = c_k$, und wobei die Koeffizienten $c_k$ derart gewählt werden, daß die Übertragungsfunktion des Filters eine Dämpfung von mindestens -30 dB, vorzugsweise mindestens -50 dB, außerhalb der Grenzen der jeweils verwendeten Frequenzbänder aufweist.

FIG.1

FIG. 2

# FIG.3

# FIG.4

B and D band digital filter, length   601